# EUROPEAN PATENT SPECIFICATION

(11) **EP 1 082 023 B1**
(45) Date of publication and mention of the grant of the patent: **02.04.2003**
(21) Application number: 98925014.7
(22) Date of filing: 29.05.1998
(51) Int. Cl.: A23G 3/30, B29C 47/10

(54) **HIGH MOLECULAR WEIGHT ELASTOMER PROCESSING SYSTEM FOR CHEWING GUM**
SYSTEM ZUR BEHANDLUNG VON HOCHMOLEKULARE ELASTOMEREN FÜR KAUGUMMI
SYSTEME DE TRAITEMENT D'UN ELASTOMERE DE POIDS MOLECULAIRE ELEVE POUR CHEWING-GUM

(43) Date of publication of application: 14.03.2001
(73) Proprietor: WARNER-LAMBERT COMPANY, Morris Plains, New Jersey 07950 (US)
(72) Inventor: DUGGAN, James, A., Machesney Park, IL 61115 (US); JANI, Bharat, K., East Brunswick, NJ 08816 (US); PURI, Tony, R., Sparta, NJ 07871 (US); FILARDO, Susan, B., Upper Nyack, NY 10960 (US); UPMANN, Arthur, W., Rockton, IL 61072 (US)
(74) Representative: Mansmann, Ivo
(86) International application number: US9810986
(87) International publication number: WO99062353

(56) References cited:
- EP-A- 0 763 331
- FR-A- 2 635 441
- GB-A- 1 360 617
- US-A- 4 453 867
- US-A- 5 650 083
- US-A- 5 715 972

## Description

### Technical Field

The invention is directed to an apparatus and method for the processing of highly viscous elastomeric materials, such as polyisobutylene, for chewing gum and chewing gum bases.

### Background Of The Invention

Elastomers are one of the principal ingredients of a chewing gum base and thus in turn one of the principal ingredients of a final chewing gum product. Typically, a chewing gum base is made separately from the final chewing gum, although there are some systems which are capable of producing a final chewing gum product in one continuous process.

A chewing gum composition typically comprises a water-soluble bulk portion, a water-insoluble chewing gum base portion, and typically water-insoluble flavoring agents. The insoluble gum base generally comprises elastomers, elastomer solvents, plasticizers, waxes, emulsifiers, and inorganic fillers. The water-soluble portion dissipates with a portion of the flavoring agent over a period of time during chewing. The gum base portion is retained in the mouth throughout the time that the product is chewed.

The batch method of producing chewing gums has long been considered the standard for producing chewing gums, as well as gum bases, on a commercial scale. The batch processes, however, which typically used Sigma-blade mixers, tend to be labor-intensive and produce chewing gums of varying consistency.

Various efforts have been undertaken to try to simplify and reduce the time required for gum base and chewing gum manufacture, as well as to prepare gum base and gum products which have better and more consistent properties. For example, the use of continuous extruders to make a final chewing gum product are shown in U.S. Patent No. 5,135,760 to Degady et al., U.S. Patent No. 5,045,325 to Lesko et al., and U.S. Patent No. 4,555,407 issued to Kramer et al. Also, there are several processes in the art for continuously producing a chewing gum base with the use of a continuous extrusion machine. These are disclosed, for example, in U.S. Patent Nos. 5,419,919 and 5,486,366, both to Song et al.

US-A-5 650 083 discloses thermoplastic material melting in a hopper-type unit having a melting grid with a plurality of openings in it.

GB-A-1 360 617 is concerned with the melt extrusion of thermoplasic polymers to extruded articles.

The continuous gum base processes and final chewing gum product processes disclosed in these patents typically utilize a continuous extrusion machine, such as a twin-screw extruder. Continuous extrusion machines which can be used for producing a chewing gum base or a final chewing gum product, or both, include extruders from Japan Steel Works, Leistriztz, Werner & Pfleiderer Corp., and Buss Mfg. Co., WLS, Togum and Baker Perkins. These extruders typically have several different feed inlets where the ingredients are added, and the elongated screws inside the barrels of the extruders are equipped with different types of mixing and blending elements.

While different equipment manufacturers make different types of screw elements, the most common types include conveying elements, compression elements, reverse conveyance elements, homogenizing elements (such as shearing disks and toothed elements), and kneading disks and kneading blocks. These various types of elements, and other elements typically used in extrusion machines, especially twin screw extruders, are well known in the art and commercially available. The elements are often specifically designed for the particular type of extruders utilized. In this regard, elements intended for similar functions will vary in design depending on the type of extruder for which they are intended.

Whether a batch-type processor or a continuous extruder-type processor is used to produce the chewing gum and gum base products, it is important to provide the various ingredients for these products in an optimum form and condition. This improves the speed and efficiency of the final processing. In this regard, ingredients such as the fillers, elastomers, plasticizers, oils, waxes, and the like, often require special handling or preparation prior to being included in the batch or extrusion process.

Preparation of the ingredients is especially important where a continuous extrusion processor is utilized.
The ingredients supplied to the continuous extrusion apparatus are preferably provided in the optimum size, shape, condition and temperature for ease of handling, insertion and intermixing with the other ingredients in the extruder. Also, due to the properties of some of the various ingredient materials, it is necessary to pre-prepare or pre-blend them in order to allow them to be inserted in the extruder in the best possible condition.

As indicated, one important component of a gum base is the elastomeric portion which can include natural elastomers, synthetic elastomers, or combinations thereof. This element of the gum base is important in that it provides the insoluble body with resiliency to recover from deformation caused by chewing. In preparing gum base, it is important that other components which are included in the base composition to effect various characteristics of the resulting chewing gum, be thoroughly mixed with the elastomeric portion so that the entire gum base product will retain proper resiliency as a homogeneous phase.

Solid elastomers suitable for use in chewing gum bases and final chewing gum products include synthetic gums or elastomers such as butadiene-styrene copolymer, polyisobutylene, and isobutylene-isoprene copolymer, as well as natural gums or elastomers such as chicle, natural rubber, jelutong, balatea, guttapercha, lechi, caspi, sorva, or mixtures thereof.

Polyisobutylene is commonly used as one of the elastomer components for the gum base. Polyisobutylene adds "chewability" to the final gum product since many elastomeric materials, such as rubber, are hard to chew. Polyisobutylene materials are commercially available, for example, from Ritchem Corp. and Exxon Corp. (VISTANEX®).

Polyisobutylene and other elastomeric materials having high molecular weights, e.g. greater than 30,000, are difficult to work with in a commercial process. These materials are difficult to handle, melt, grind up and cut into smaller pieces due to their viscosity, consistency and characteristics. The difficulties in processing these materials are compounded when a continuous extrusion process is utilized where the materials need to be added in a predetermined amount and at a predetermined state and temperature.

When melting and processing these elastomeric materials, such as polyisobutylene, it is important not to trap air in the molten or liquified materials. Entrapped air prevents accurate and efficient metering of the material into a continuous extruder. Air entrapped also encourages undesirable oxidation of the material.

In batch-type processes, the high molecular weight elastomeric materials can be utilized more easily than with extruders. With batch-type processes, the bales, slabs or cylinders of material are simply inserted in the batch mixing tank and allowed to melt over time and mix with the other components in the tank.

In order to melt these materials, it is typically necessary to heat them in excess of 120-150°C (250-300°C). In order to utilize these materials in a chewing gum or gum base processing system using a continuous extrusion apparatus, it is necessary to also maintain them at such elevated temperatures in order for them to stay in a liquid condition. Such elevated temperatures, however, if used for any length of time in the main extruder, could adversely affect other ingredients in the system.

It is a general object of the present invention to provide an improved method and apparatus for the production of chewing gum products and gum base products. It is also an object of the present invention to provide an improved method and apparatus for preparation of high molecular weight elastomeric materials, such as polyisobutylene, in order to facilitate improved processing of chewing gum and gum base products.

It is still another object of the present invention to provide a method and apparatus for continuously melting and storing elastomeric materials, such as polyisobutylene. It is another object of the present invention to provide an improved process and apparatus for feeding high molecular weight elastomeric materials, such as polyisobutylene, in a liquid or melted condition into a chewing gum or gum base processing system which utilizes a continuous extruder.

These and other objects, benefits and advantages are met by the present invention which is detailed in preferred form in the following description.

### Summary Of The Invention

The present invention provides an apparatus for producing a gum base and the final chewing gum product, according to claims 1 and 16 respectively. The apparatus is used to melt and supply certain high molecular weight elastomeric materials, such as polyisobutylene, which are used as some of the ingredients of the gum base product. Preferably, the present invention is used with elastomeric materials having molecular weights in excess of 30,000. Where a continuous extrusion machine is utilized, the elastomeric materials prepared and supplied in accordance with the present invention can be fed and inserted directly into the barrel of the extrusion machine during the operation of a continuous, steady-state, gum base extrusion process.

In accordance with the present invention, a solid piece of the elastomeric material is positioned on sets or groups of heated plates arranged in "fan"-type configurations. The plates are internally heated, such as by circulation of heated oil, in order to reach the temperatures necessary to melt the material. A plurality of heated diverter members are positioned immediately below the heated melt plates. The melt plates and diverter members are positioned in a housing which is kept at an elevated temperature by steam-heated jackets. The housing in turn is connected to a heated sloped conduit which directs the melted and liquified material into a heated holding tank. The angled conduit and holding tank are both jacketed on their external surfaces with steam coils. In this manner, the conduit and holding tank are heated to temperatures above the melting point of the elastomeric material in the housing.

The elastomeric material positioned on the melt plates in the housing is slowly heated and melted and passed through the fan-type plates onto the diverter members. The melted material in turn is directed by gravity and without agitation or formation of air bubbles through the angled conduit and into the holding tank.

The liquified material is discharged from the holding tank by an isolation valve and pump mechanism. With the present invention, high weight elastomeric materials, such as polyisobutylene, are melted and contained as a liquid with minimum air entrapment and oxidation. The material is in a condition and temperature to be introduced directly into a continuous extrusion-type process and be precisely metered into it.

### Brief Description Of The Drawings

FIGURE 1 is a schematic diagram of an elastomer processing system in accordance with the present invention;
FIGURE 2 is a side cross-sectional view of the processing system shown in Figure 1;
FIGURE 3 is a top view of the processing system as shown in Figures 1 and 2;
FIGURE 4 depicts a preferred fan-type arrangement of heated melting plates in accordance with the present invention; and
FIGURE 5 is a schematic diagram illustrating the use of the present invention with a continuous chewing gum or gum base extrusion process.

### Best Mode(s) Of Practicing The Invention

The present invention is particularly suitable for processing high molecular weight elastomeric products and materials, such as polyisobutylene, which are used as some of the ingredients in chewing gum bases and chewing gum products. One of the trade designations for polyisobutylene is Vistanex®, a product of Exxon Corp. Other commercially available polyisobutylene materials are available from Ritchem Corp. Preferably, the present invention is used with elastomeric materials having molecular weights in excess of 30,000.

In general, the present invention provides an apparatus and method for melting, storing and feeding high molecular weight elastomeric materials to facilitate their introduction and use in a continuous process for producing a chewing gum base or chewing gum product. In this regard, it is to be understood that the present invention can be used for preparing the polyisobutylene or other elastomeric component of either a chewing gum base or a final chewing gum product and can be used with either a batch-type system or a continuous extruder-type system.

In the preferred embodiment of the present invention, and for use in illustrating the present invention, it is described herein with reference to its use in a continuous gum base manufacturing system which utilizes an extruder. In particular, for use with a continuous gum base process, the present invention facilitates the feeding and intermixing of certain elastomeric components of the gum base with other ingredients and components of the gum base product.

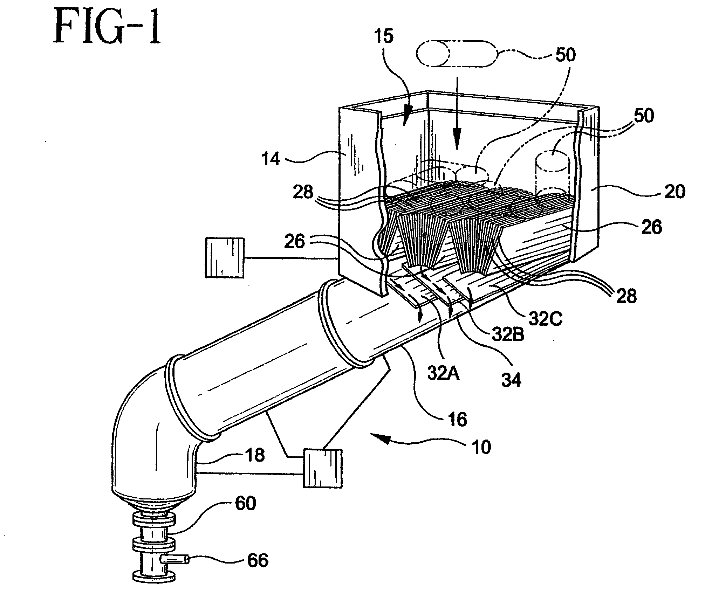

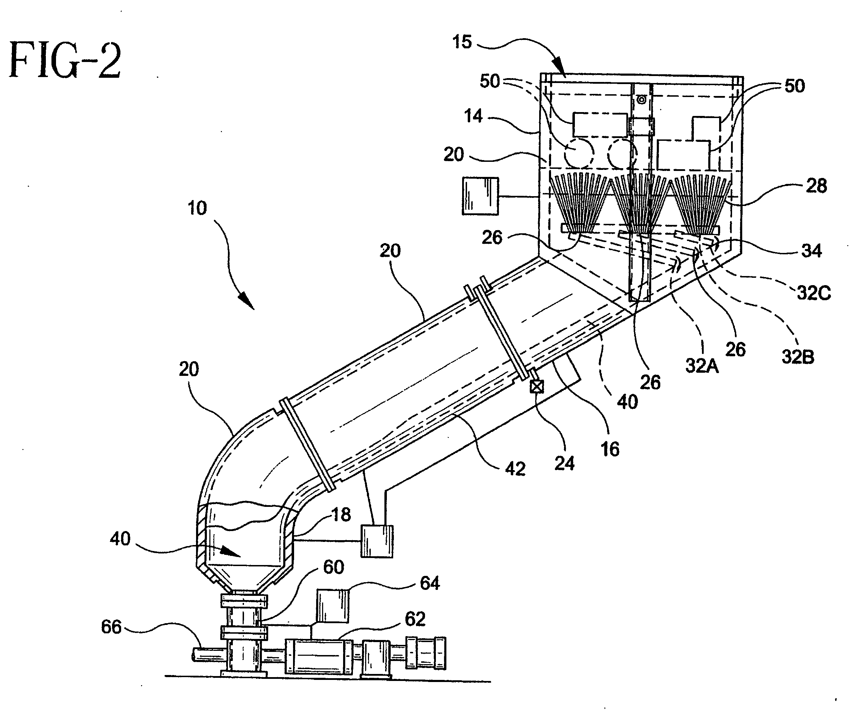

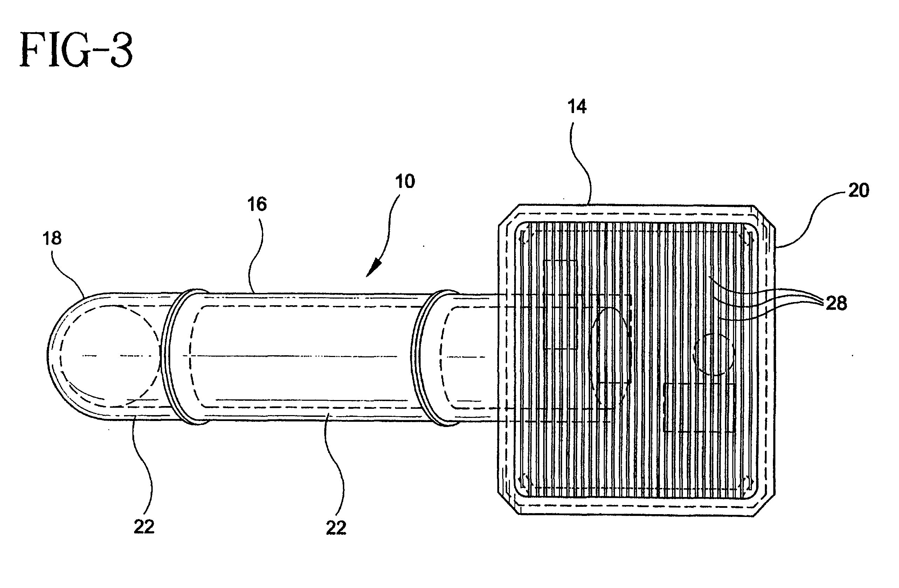

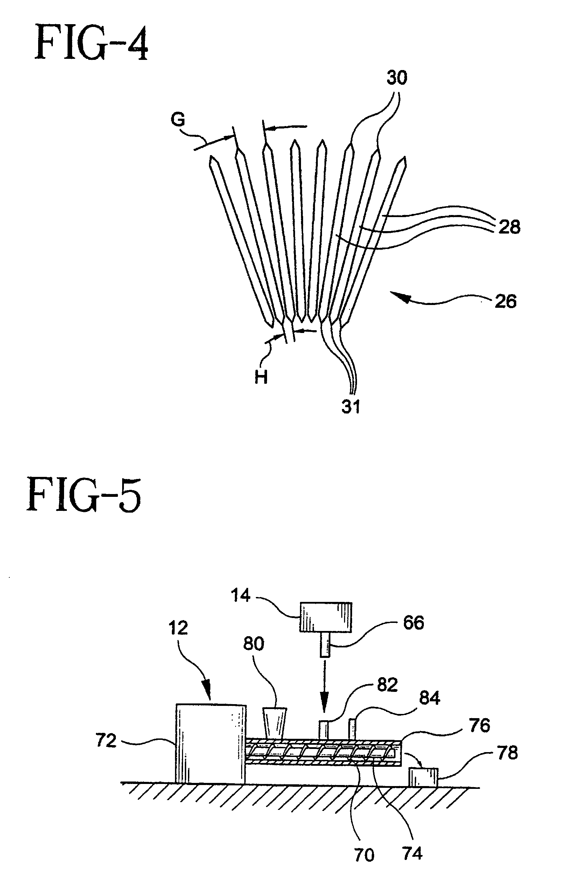

A schematic illustration of the apparatus in accordance with the present invention is shown in Figure 1 and referred to by the reference numeral 10. Figures 2 and 3 are side and top views, respectively, of the apparatus 10, with Figure 2 being in partial cross-section. Figure 4 is an enlarged view of the preferred fan-configured melt plates utilized with the present invention. Figure 5 is a schematic diagram of the use of the present invention with a continuous gum base manufacturing process using a continuous extruder 12.

Elastomers are one of the principal ingredients of a chewing gum base and thus in turn one of the principal ingredients of a final chewing gum product. A typical chewing gum base includes one or more elastomers, together with one or more fillers, elastomer solvents, plasticizers and, optionally, polymers, waxes, emulsifiers and miscellaneous colors, flavors and anti-oxidants. The elastomeric portion of the product can include natural elastomers, synthetic elastomers, or combinations thereof. Solid elastomers suitable for use in chewing gum bases and the final chewing gum product include synthetic gums or elastomers, such as butadine-styrene co-polymer, polyisobutylene, and isobutylene-isoprene co-polymer, as well as natural gums or elastomers, such as chicle, natural rubber, jelutong, baletea, guttapercha, lechi, caspi, sorva, or mixtures thereof.

The elastomeric element of the gum base provides the insoluble body with resiliency to recover from deformation caused by chewing. With many gum bases and gum products, other elastomeric products, such as polyisobutylene, are added in order to increase the "chewability" of the gum. Many of these elastomeric materials, however, are difficult to handle and process. In particular, due to their low viscosity, high molecular weight and resultant characteristics and properties, these materials do not easily or rapidly change from a solid to a liquid. Moreover, these materials are difficult to accurately meter and introduce in a consistent manner to the gum base or chewing gum product, thus often resulting in non-uniform and inconsistent results.

Whether a batch-type process or a continuous extruder-type processor is used to produce the chewing gum and gum base products, it is important to provide the various ingredients for those products in the best form and condition. This improves the speed and efficiency of the final processing, and ensures consistency and uniformity from batch to batch and product to product. In this regard, ingredients such as the fillers, elastomers, plasticizers, oils, waxes, and the like often require special handling and preparation prior to being included in the batch or extrusion process.

Preparation of the ingredients is especially important where a continuous extrusion processor is utilized. The ingredients supplying a continuous extrusion apparatus are preferably provided in the optimum size, shape, condition (solid, liquid, etc.) and temperature for ease of insertion and intermixing with the other ingredients in the extruder. Also, the properties of many of the various ingredient materials require them to be pre-blended with other materials or to be solidified, broken up into particles, or liquified in order to be inserted in the extruder in the best possible condition.

Also, it is important to precisely control the amount of material that is added to the continuous extrusion processor in order to provide uniformity and consistency in the final product. Often, when elastomers, such as polyisobutylene, and other ingredients are melted and liquified, air becomes entrapped in them, or other impurities become embedded in them, which affects the unit weight and unit volume of the materials. Air also causes undesirable oxidation of the materials. These factors in turn affect the quality, uniformity and consistency of the final products.

The present invention provides an apparatus and method which melts and processes highly viscous, high molecular weight elastomeric materials, such as polyisobutylene, in an optimum manner for possible use in a continuous extrusion-type system. Preferably, the present invention is used with elastomeric materials having molecular weights in excess of 30,000. The material is uniformly melted in a heated tank and has a gravity transition from the tank to a holding area of the apparatus. This ensures a constant melting temperature and melting conditions for the material, and also eliminates air entrapment and other impurities from entering the system.

As shown in Figures 1-3, the apparatus 10 includes a housing section 14, an angled conveying or transport section 16 and a holding tank section 18. Each of the three sections 14, 16 and 18 are heated around their external peripheries in order to maintain a desired temperature internally in all sections of the apparatus 10. In this regard, housing 14, as well as sections 16 and 18, are externally jacketed with steam coils 20. These jackets have passageways and conduits for circulation of a heated fluid, such as steam, and are positioned on or around the external peripheries of the housing and adjacent sections. The steam coil members 20 are of conventional design and are supplied by steam from conventional sources (not shown) with appropriate temperature and delivery controls.

One or more load cells 24 are preferably positioned at various points on the apparatus in order to measure the weight thereof and determine the amount of heated and liquified material in the apparatus. In this regard, Figure 2 depicts one load cell 24, although it is to be understood that a plurality of load cells can be provided in accordance with conventional practice.

Several sets 26 of heated melt plates 28 are situated in the housing 14. The plates 28 are positioned in sets 26 of fan-type groupings or arrangements as shown in Figures 1, 2 and 4. The plates have larger openings or gaps G at their upper ends and smaller openings or gaps H at their lower ends. Also, as shown in Figure 4, the upper and lower elongated edges 30 and 31 of each of the plates 28 have pointed ends.

One or more diverter members are positioned immediately below the sets 26 of heated melt plates 28. In this regard, the embodiment of the invention shown in Figures 1 and 2 has three diverter members 32A, 32B and 32C. These correspond to the three sets 26 of heated melt plates. The plates 32A, 32B and 32C are of different lengths and are used to divert melted or liquified material flowing through the sets of plates toward the angled surface or surfaces of the conveyance section 16. This is shown by arrows 34 in Figures 1 and 2.

The housing and sections of the apparatus, as well as the melt plates and diverter members, are preferably each made from a stainless steel material. The melt plates and diverter members have internal cavities and are internally heated by the circulation of heated oil. Preferably the plates and members comprise two sheets of material welded together. The oil is heated and supplied by a conventional source (not shown).

The holding tank section 18 of the apparatus 10 is used to accumulate and store an amount of the liquified elastomeric material. As shown in Figure 2, the material is melted and proceeds down the slanted side 42 of the angled conveyance section 16 and forms a batch of melted material 40 in the holding tank section.

The elastomeric material is introduced into the apparatus 10 through the open top 15 of the housing section 14. The elastomeric material can be supplied in any conventional solid form, such as slabs, bales, or cylinders, and can be introduced into the housing manually or by any conventional automatic mechanism, such as an overhead crane-type apparatus. In this regard, a plurality of cylinders 50 are shown in phantom lines in Figures 1 and 2 as being representative of the elastomeric materials used with the present invention. The solid pieces of material 50 are placed directly on the upper ends 30 of the heated plate members 28.

Preferably, the temperatures of the heated steam coils on the housing 14 and sections 16 and 18, as well as the temperatures in the heated melt plates 28 and diverter members 32A-C, are kept above the melting temperature of the elastomeric material used in the process. For example, with polyisobutylene, the temperature of the various components of the apparatus 10 are maintained at temperatures up to 260°C (500°F).

Due to the elevated temperatures in the apparatus 10, the elastomeric material positioned on the melt plates 28 in the housing section 14 melts in a slow and uniform manner. The material flows by gravity down through the fan-type groupings of heated plates 28, along the angled heated diverter members 32A, 32B and 32C, and against the heated angled side 42 of the conveyance section 16. The melted material then flows by gravity into the holding or storage tank section 18.

In order to use the liquified material for further processing, the apparatus 10 is provided with a valve mechanism 60 and pump mechanism 62. The valve and pump mechanisms 60 and 62 are controlled by a conventional control and delivery system 64 in order to discharge an appropriate amount of liquid elastomer material 40 when required for the chewing gum or gum base processing system. In this regard, a pipe or conduit 66 is attached to the valve mechanism 60 in order to provide the liquid material 40 to the extruder 12.

Referring now to Figure 5, the extruder 12 includes an elongated barrel section 70 and a motor and control section 72. The barrel 70 has one or more elongated screw members 74 positioned in it which process the gum base ingredients and advance them in a homogeneous molten mass to the discharge end 76 where the mass is discharged into appropriate containers 78.

The extruder 12 has a number of inlet ports, three of which (80, 82 and 84), are shown. It is also possible for there to be a larger or smaller number of inlet ports for the extruder 12. In the representative extruder device 12 illustrated in Figure 5, the liquid elastomeric material from apparatus 10 is introduced into the barrel 70 of the extruder through inlet port 82.

In order to melt and process an adequate amount of elastomeric material for a commercial gum base process, the apparatus 10 should have a substantial size and capacity. In this regard, for illustration, the housing section 12 can be several feet in dimension along each of its sides. Preferably, a system in accordance with the present invention has a melting tank apparatus that melts the elastomeric material at a temperature as high as 260°C (500°F). For commercial purposes, the apparatus 10 preferably has the ability to melt several hundred pounds per hour of the melted material and hold it at the desired delivery temperature. The delivery system feeds the melted material to the processor or extruder consistently and at a specified feed rate and pressure. The present invention facilitates this by allowing the melted material to flow by gravity and have a gravitationally transition from the melting plates 28 to the holding section 18 of the apparatus, eliminating air entrapment.

The system in accordance with the present invention also preferably has several hundred square feet of melting surface area in the heated melt plate members 28. Further, the delivery pump 62 is steam heated and is controlled in a conventional manner to deliver the melted material at a consistent rate for commercial production.

## Claims

1. An apparatus (10) for melting and processing a high molecular weight elastomeric material, such apparatus (10) comprising:
a housing (14);
an angled conveyance section (16) attached to and operatively associated with said housing (14) for conveying melted elastomeric material from said housing (14);
a storage section (18) attached to and operatively associated with said conveyance section (16) for storing melted elastomeric material received from said conveyance section (16);
a plurality of heated plate members (28) positioned in said housing (14) for melting said elastomeric material;
said plurality of heated plate members (28) being arranged in at least one fan-shape grouping (26) wherein the plates have larger openings at their upper ends and smaller openings at their lower ends; and
at least one diverter member (32 A-C) positioned in said housing (14) immediately adjacent said heated plate members (28) for directing melted elastomeric material from said heated plate members (28) into said conveyance section (16).

2. The apparatus (10) as set forth in claim 1 wherein said at least one diverter member (32) is heated.

3. The apparatus (10) as set forth in claim 1 further comprising internal cavities in said plate members (28).

4. The apparatus (10) as set forth in claim 1 further comprising internal cavities in said at least one diverter member (32).

5. The apparatus (10) as set forth in claim 1 wherein the melt plates (28) and said at least one diverter member (32) comprising two sheets of material welded together.

6. The apparatus (10) as set forth in claim 1 wherein the melt plates (28) and at least one diverter member (32) are internally heated by the circulation of heated oil

7. The apparatus (10) as set forth in claim 1 further comprising steam heated jackets in said housing.

8. The apparatus (10) as set forth in claim 1 further comprising steam coils for heating said housing (14), conveyance section (16) and storage section (18).

9. The apparatus (10) as set forth in claim 1 further comprising a valve (60) and pump (62) mechanism for removing material (40) from said storage section (18).

10. The apparatus (10) as set forth in claim 1 further comprising a load cell (24) for supporting said apparatus (10).

11. The apparatus (10) as set forth in claim 1 wherein said heated plate members (28) are positioned in at least two sets of fan-shape groupings (26).

12. The apparatus (10) as set forth in claim 11 wherein a diverter member (32) is provided separately for each of said fan-shape groupings (26).

13. The apparatus (10) as set forth in claim 1 wherein said material is directed by gravity from said at least one diverter member (32) to said conveyance section (16).

14. The apparatus (10) as set forth in claim 1 wherein said elastomeric material is polyisobutylene.

15. The apparatus (10) as set forth in claim 1 wherein said elastomeric material has a molecular weight in excess of 30,000.

16. A system for introducing a liquified elastomeric material into a continuous gum base manufacturing process, said process including an extruder (12) with a plurality of ports (80, 82, 84), said system comprising:
an apparatus (10) for converting solid elastomeric material to a liquid, said apparatus (10) having
a heated housing (14),
a heated conveyance section (16),
heated storage section (18), and
a plurality of heated plate members (28) positioned in said housing (14) for melting said material, said plate members (28) being arranged in at least one fan-shape grouping (26) and the plates having larger openings at their upper ends and smaller openings at their lower ends;
removal means (60, 62) for removing heated liquid elastomeric material from said apparatus (10); and
conveyance means (66) for transporting said liquid elastomeric material to one of said ports (80, 82, 84) in said extruder (12).

17. The system as set forth in claim 16 wherein said apparatus (10) further comprises at least one diverter member (32) for directing the melted material by gravity from said heated plate members (28) to said conveyance section (16).

18. The system as set forth in claim 16 wherein said at least one diverter member (32) is heated.

19. The system as set forth in claim 16 wherein said elastomeric material is polyisobutylene.

20. The system as set forth in claim 16 wherein said elastomeric material has a molecular weight in excess of 30,000.

21. The system as set forth in claim 16 wherein said heated plate members (28) and at least one diverter member (32) are positioned in said housing (14) to allow melted elastomeric material to flow by gravity into said storage section (18), wherein the entrapment of air in said liquid material is minimized.

## Revendications

1. Appareil (10) pour fondre et traiter une matière élastomère de masse moléculaire élevée, un tel appareil (10) comprenant :
un logement (14) ;
une section de transport inclinée (16) fixée et associée fonctionnellement audit logement (14) pour transporter la matière élastomère à l'état fondu provenant dudit logement (14) ;
une section de stockage (18) fixée et associée fonctionnellement à ladite section de transport (16) pour stocker la matière élastomère à l'état fondu reçue en provenance de ladite section de transport (16) ;
une pluralité d'éléments de plaque chauffante (28) positionnés dans le logement (14) pour fondre ladite matière élastomère ;
ladite pluralité d'éléments de plaque chauffante (28) étant disposés dans au moins un groupement en forme d'éventail (26) dans lequel les plaques possèdent des ouvertures plus grandes au niveau de leurs extrémités supérieures et des ouvertures plus petites au niveau de leurs extrémités inférieures ; et
au moins un élément dérouteur (32 A à C) positionné dans ledit logement (14) immédiatement adjacent auxdits éléments de plaque chauffante (28) pour diriger la matière élastomère à l'état fondu à partir desdits éléments de plaque chauffante (28) dans ladite section de transport (16).

2. Appareil (10) selon la revendication 1, dans lequel ledit au moins un élément dérouteur (32) est chauffé.

3. Appareil (10) selon la revendication 1, comprenant de plus des cavités internes dans lesdits éléments de plaque (28).

4. Appareil (10) selon la revendication 1, comprenant de plus des cavités internes dans ledit au moins un élément dérouteur (32).

5. Appareil (10) selon la revendication 1, dans lequel les plaques de fusion (28) et ledit au moins un élément dérouteur (32) comprenant deux feuilles de matière jointes par soudage.

6. Appareil (10) selon la revendication 1, dans lequel les plaques de fusion (28) et au moins un élément dérouteur (32) sont chauffés par l'intérieur à l'aide de la circulation d'une huile chauffée.

7. Appareil (10) selon la revendication 1, comprenant de plus des chemises chauffées à la vapeur dans ledit logement.

8. Appareil (10) selon la revendication 1, comprenant de plus des serpentins à vapeur pour chauffer lesdits logement (14), section de transport (16) et section de stockage (18).

9. Appareil (10) selon la revendication 1, comprenant de plus un mécanisme de valve (60) et de pompe (62) pour retirer la matière (40) de ladite section de stockage (18).

10. Appareil (10) selon la revendication 1, comprenant de plus un capteur à jauge (24) pour supporter ledit appareil (10).

11. Appareil (10) selon la revendication 1, dans lequel lesdits éléments de plaque chauffante (28) sont positionnés dans au moins deux jeux de groupements en forme d'éventail (26).

12. Appareil (10) selon la revendication 11, dans lequel l'élément dérouteur (32) est fourni séparément pour chacun desdits groupements en forme d'éventail (26).

13. Appareil (10) selon la revendication 1, dans lequel ladite matière est dirigée par gravité à partir dudit au moins un élément dérouteur (32) vers ladite section de transport (16).

14. Appareil (10) selon la revendication 1, dans lequel ladite matière élastomère est le polyisobutylène.

15. Appareil (10) selon la revendication 1, dans lequel ladite matière élastomère possède une masse moléculaire supérieure à 30 000.

16. Système pour introduire une matière élastomère liquéfiée dans un procédé continu de fabrication de base de gomme, ledit procédé incluant une extrudeuse (12) ayant une pluralité d'orifices (80, 82, 84), ledit système comprenant :
un appareil (10) pour convertir la matière élastomère solide en liquide, ledit appareil (10) possédant
un logement chauffé (14),
une section de transport chauffée (16),
une section de stockage chauffée (18), et
une pluralité d'éléments de plaque chauffante (28) positionnés dans ledit logement (14) pour fondre ladite matière, lesdits éléments de plaque (28) étant disposés dans au moins un groupement en forme d'éventail (26) et les plaques possédant des ouvertures plus grandes au niveau de leurs extrémités supérieures et des ouvertures plus petites au niveau de leurs extrémités inférieures ;
un moyen de retrait (60, 62) pour retirer la matière élastomère liquide chauffée dudit appareil (10) ; et
un moyen de transport (66) pour transporter ladite matière élastomère liquide vers un desdits orifices (80, 82, 84) dans ladite extrudeuse (12).

17. Système selon la revendication 16, dans lequel ledit appareil (10) comprend de plus au moins un élément dérouteur (32) pour diriger la matière à l'état fondu par gravité à partir desdits éléments de plaque chauffante (28) vers ladite section de transport (16).

18. Système selon la revendication **16**, dans lequel ledit au moins un élément dérouteur (32) est chauffé.

19. Système selon la revendication 16, dans lequel ladite matière élastomère est le polyisobutylène.

20. Système selon la revendication 16, dans lequel ladite matière élastomère possède une masse moléculaire en excès de 30 000.

21. Système selon la revendication 16, dans lequel lesdits éléments de plaque chauffante (28) et au moins un élément dérouteur (32) sont positionnés dans ledit logement (14) en vue de permettre à la matière élastomère à l'état fondu de s'écouler par gravité dans ladite section de stockage (18), dans lequel le piégeage de l'air dans ladite matière liquide est minimisé.

## Patentansprüche

1. Vorrichtung (10) zum Schmelzen und Verarbeiten eines elastomeren Materials mit hohem Molekulargewicht, wobei die Vorrichtung (10) umfasst:
ein Gehäuse (14) ;
einen in einem Winkel befindlichen bzw. schrägen Förderabschnitt (16), der an dem Gehäuse (14) befestigt und im Betrieb mit diesem verbunden ist, zum Transport von geschmolzenem elastomeremMaterial von dem Gehäuse (14);
einen Aufbewahrungsabschnitt (18), der an dem Förderabschnitt (16) befestigt ist und im Betrieb mit diesem verbunden ist, zum Aufbewahren von geschmolzenem elastomerem Material, das aus dem Förderabschnitt (16) erhalten wurde; eine Mehrzahl beheizter Plattenelemente (28), die im Gehäuse (14) positioniert sind, zum Schmelzen des elastomeren Materials;
wobei die Mehrzahl von beheizten Plattenelementen (28) in mindestens einer fächerförmigen Gruppierung (26) angeordnet sind, wobei die Platten größere Öffnungen an den oberen Enden und kleinere Öffnungen an den unteren Enden aufweisen, und
mindestens ein Verteilerelement (32A-C), das in dem Gehäuse (14) unmittelbar angrenzend an die beheizten Plattenelemente (28) positioniert ist, zum Führen von geschmolzenem elastomerem Material von den beheizten Plattenelementen (28) in den Förderabschnitt (16).

2. Vorrichtung (10) nach Anspruch 1 wobei das mindestens eine Verteilerelement (32) beheizt ist.

3. Vorrichtung (10) nach Anspruch 1, die ferner Hohlräume im Inneren der Plattenelemente (28) umfasst.

4. Vorrichtung (10) nach Anspruch 1, die ferner Hohlräume im Inneren des mindestens einen Verteilerelements (32) umfasst.

5. Vorrichtung (10) nach Anspruch 1, wobei die Schmelzplatten (28) und das mindestens eine Verteilerelement (32) zwei miteinander verschweißte Materiallagen umfasst.

6. Vorrichtung (10) nach Anspruch 1, wobei die Schmelzplatten (28) und mindestens ein Verteilerelement (32) von innen durch Zirkulieren von erhitztem Öl beheizt werden.

7. Vorrichtung (10) nach Anspruch 1, die ferner mit Dampf beheizte Ummantelungen in dem Gehäuse umfasst.

8. Vorrichtung (10) nach Anspruch 1, die ferner Dampfrohrschlangen zum Beheizen des Gehäuses (14), des Förderabschnitts (16) und des Aufbewahrungsabschnitts (18) umfasst.

9. Vorrichtung (10) nach Anspruch 1, die ferner einen Ventilmechanismus (60) und einen Pumpenmechanismus (62) zum Entfernen von Material (40) aus dem Aufbewahrungsabschnitt (18) umfasst.

10. Vorrichtung (10) nach Anspruch 1, die ferner eine Meßdose (24) zur Unterstützung der Vorrichtung (10) umfasst.

11. Vorrichtung (10) nach Anspruch 1, wobei die beheizten Plattenelemente (28) in mindestens zwei Sätzen von fächerförmigen Gruppierungen (26) positioniert sind.

12. Vorrichtung (10) nach Anspruch 11, wobei ein Verteilerelement (32) getrennt für jede der fächerförmigen Gruppierungen (26) bereitgestellt ist.

13. Vorrichtung (10) nach Anspruch 1, wobei das Material durch die Schwerkraft von dem mindestens einen Verteilerelement (32) zum Förderabschnitt (16) geführt wird.

14. Vorrichtung (10) nach Anspruch 1, wobei das elastomere Material Polyisobutylen ist

15. Vorrichtung (10) nach Anspruch 1, wobei das elastomere Material ein Molekulargewicht von über 30 000 aufweist.

16. System zum Einführen eines verflüssigten elastomeren Materials in ein kontinuierliches Gummigrundlageherstellungsverfahren, wobei das Verfahren einen Extruder (12) mit einer Mehrzahl von Anschlüssen (80, 82, 84) umfasst, wobei das System umfasst:
eine Vorrichtung (10) zur Umwandlung von festem elastomerem Material in eine Flüssigkeit, wobei die Vorrichtung (10) ein beheiztes Gehäuse (14),
einen beheizten Förderabschnitt (16),
einen beheizten Aufbewahrungs- bzw. Vorhalteabschnitt (18) und
eine Mehrzahl von beheizten Plattenelementen (28), die in dem Gehäuse (14) positioniert sind, zum Schmelzen des Materials aufweist, wobei die Plattenelemente (28) in mindestens einer fächerförmigen Gruppierung (26) angeordnet sind und die Platten größere Öffnungen an ihren oberen Enden und
kleinere Öffnungen an ihren unteren Enden aufweisen; Entfernungseinrichtungen (60, 62) zum Entfernen von erhitztem flüssigem elastomerem Material von der Vorrichtung (10); und
Fördereinrichtungen (66) zum Transportieren des flüssigen elastomeren Materials zu einem der Anschlüsse (80, 82, 84) im Extruder (12).

17. System nach Anspruch 16, wobei die Vorrichtung (10) ferner mindestens ein Verteilerelement (32) zum Führen des geschmolzenen Materials durch die Schwerkraft von den beheizten Plattenelementen (28) zum Förderabschnitt (16) umfasst.

18. System nach Anspruch 16, wobei mindestens ein Verteilerelement (32) beheizt ist.

19. System nach Anspruch 16, wobei das elastomere Material Polyisobutylen ist.

20. System nach Anspruch 16, wobei das elastomere Material ein Molekulargewicht von über 30 000 aufweist.

21. System nach Anspruch 16, wobei die beheizten Plattenelemente (28) und mindestens ein Verteilerelement (32) in dem Gehäuse (14) so positioniert sind, dass geschmolzenes elastomeres Material durch die Schwerkraft in den Aufbewahrungs- bzw. Vorhalteabschnitt (18) fließen kann, wobei das Einfangen von Luft in dem flüssigen Material minimiert ist.
